# EUROPÄISCHE PATENTSCHRIFT

(11) **EP 0 686 831 B1**
(45) Veröffentlichungstag und Bekanntmachung des Hinweises auf die Patenterteilung: **02.05.2002**
(21) Anmeldenummer: 95108199.1
(22) Anmeldetag: 30.05.1995
(51) Int. Cl.: G01F 1/40, G01F 1/42

(54) **Durchflussmessgerät**
Flowrate measuring apparatus
Appareil de mesure du débit

(30) Priorität: 07.06.1994 DE 4419846
(43) Veröffentlichungstag der Anmeldung: 13.12.1995
(73) Patentinhaber: BASF AKTIENGESELLSCHAFT, 67056 Ludwigshafen (DE)
(72) Erfinder: Scholl, Karl-Heinz, D-67167 Erpolzheim (DE); Eichelberger, Klaus, Dr., D-67434 Neustadt (DE); Heiseck, Ralf, D-67098 Bad Dürkheim (DE)

(56) Entgegenhaltungen:
- DE-A- 4 025 323
- US-A- 3 822 592

## Beschreibung

Die Erfindung betrifft ein Durchflußmeßgerät für flüssige oder gasförmige Produkte, bestehend aus einer den Meßwert aufnehmenden Anordnung einer in eine das zu messende Produkt führende Leitung eingefügten Blende oder Düse und beidseitig der Blende oder Düse an die Leitung angeschlossenen Wirkdruckleitungen aus einem mit diesen in Verbindung stehenden Meßumformer, dessen Ausgang mit einer Auswerte- und Anzeigeeinheit verbunden ist.

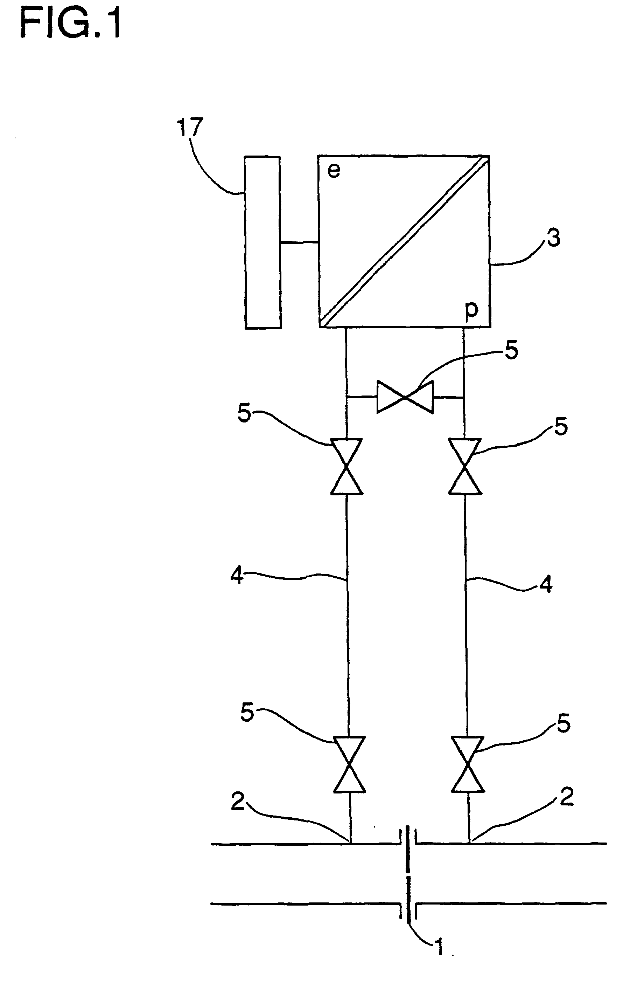

Durchflußmeßverfahren nach dem Wirkdruckprinzip werden zur Bestimmung von Flüssigkeits-, Gas- und Dampfströmen über weite Druck- und Temperaturbereiche eingesetzt. In das strömende Medium werden Drossel 1 (Figur 1), beispielsweise Blenden, Düsen eingebaut. Dabei entsteht eine Druckdifferenz zwischen beiden Seiten der Drossel. Der Differenzdruck wird an Bohrungen 2 in der Rohrwand aufgenommen und mittels beliebig langer Wirkdruckleitungen 4, die verschiedene Absperrorgane 5 enthalten, zum Differenzdruckmeßumformer 3 weitergeleitet.

Die bekannten Wirkdruckverfahren zeigen verschiedene Nachteile.
- Je nach Art des zu messenden Mediums müssen die Wirkdurckleitungen unterschiedlich geführt werden und eventuell sogar Ausgleichsgefäße beinhalten oder sogar beheizt werden.
- Um die Wirkdruckleitungen anschließen zu können, sind spezielle Entnahmestutzen erforderlich, deren Herstellung aufwendig ist.
- Die Wirkdruckleitungen sind aufwendig und kostenintensiv bei der Montage. Wegen vieler Nahtstellen ist die Wahrscheinlichkeit von Leckagen relativ hoch.
- Die eingesetzten Meßumformer erfordern wegen ihres fest eingestellten Meßbereiches ein dem strömenden Medium angepaßtes Drosselgerät. Bei Änderungen der physikalischen Gegebenheiten ist eine Änderung der Drossel und somit eine Abstellung der Rohrleitung erforderlich.

In D1 (DE-A 40 25 323) ist eine Vorrichtung zur Durchflußmessung an Heizkörpern offenbart, bei welcher ein Ventil als Schließkörper eingesetzt wird.

Vorliegender Erfindung liegt dementsprechend die Aufgabe zugrunde, ein Durchflußmeßgerät zu entwickeln, welches sowohl im Aufbau als auch in der Einsatzmontage weniger aufwendig ist als die bisher üblichen Geräte und einen sicheren sowie möglichst einfachen Betrieb gewährleisten.

Gelöst wurde die Aufgabe durch ein Durchflußmeßgerät der eingangs geschilderten Art, bei dem gemäß der Erfindung die Blende oder Düse und die diese einschließenden Leistungsabschnitte mit den daran angeschlossenen Wirkdruckleitungen einen einstückigen, einen Meßwertaufnehmer dargestellten Funktionsblock bilden, und die Wirkdruckleitungen in einen Anschlußflansch für den Meßumformer münden.

Weitere Einzelheiten und vorteilhafte Ausgestaltungen des erfindungsgemäßen Durchflußmeßgerätes sind anhand eines in der Zeichnung dargestellten Ausführungsbeispiels nachfolgend beschrieben.

Es zeigen
- Figur 1: das Schaltschema eines Durchflußmeßgerätes nach dem Stand der Technik
- Figur 2: das nach der Erfindung kompakte Durchflußmeßgerät

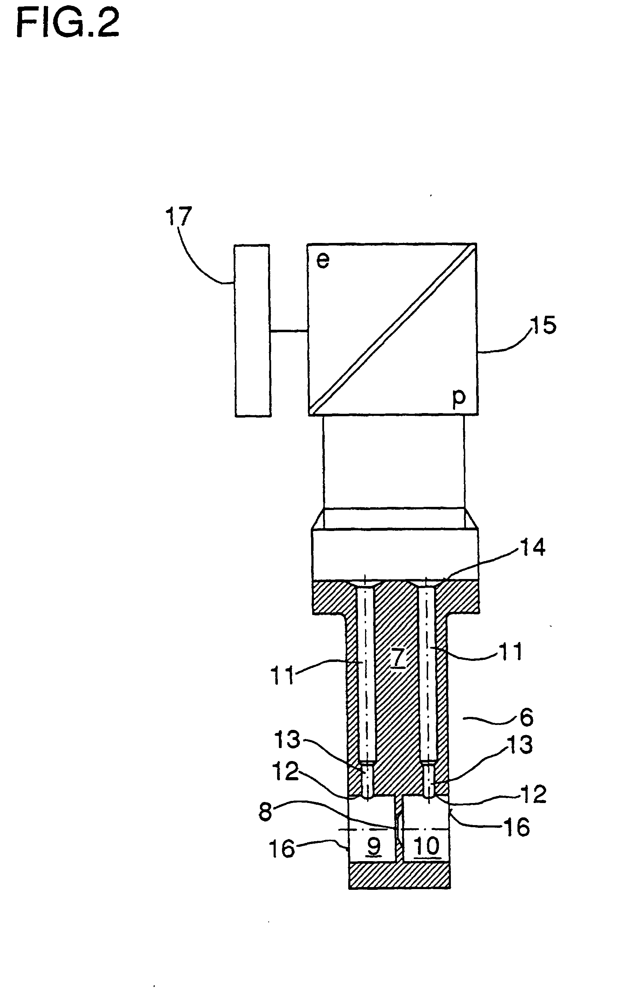

In der Figur 2 ist der meßwertaufnehmende Teil des Durchflußmeßgerätes als einstückiger Funktionsblock 6 im Längsschnitt zu sehen. In ein Werkstück 7 sind die Blende oder Düse 8 einschließende Leitungsabschnitte 9 und 10 und Wirkdruckleitungen 11 mit den an Bohrungen 12 in die Leitungsabschnitte mündenden Druckentnahmekanälen 13 eingearbeitet. Die Blende oder Düse ist ein Teil der Leitungsabschnitte und z.B. durch das Herstellverfahren bereits mit diesen verbunden. Die Bohrungen sind dabei so dimensioniert, daß immer turbulente Strömung im engsten Querschnitt herrscht und somit die Meßwerte unabhängig von der Reynolds-Zahl sind.

Die Wirkdruckleitungen 11 münden im oberen Teil des Werkstücks 7 in einen Anschlußflansch 14, dessen normgerechte Dichtfläche den Anschluß eines Meßumformers 15 unabhängig von der Herkunft ermöglicht. Der Ausgang des Meßumformers ist mit einer Auswerte- und Anzeigeneinheit 17 verbunden, durch den der Durchflußmeßwert abgelesen werden kann und gegebenenfalls zur Weiterverarbeitung zur Verfügung steht. Sowohl der Meßumformer als auch die Auswerteund Anzeigeneinheit sind Geräte, die im Fachhandel zur Verfügung stehen und deshalb weiter nicht beschrieben werden brauchen.

Das Werkstück ist an den Offnungen der Leitungsabschnitte 9 und 10 ebenfalls mit normgerechten Dichtflächen 16 versehen, so daß der Meßwertaufnehmer 6 zwischen die Normflansche einer Produktleitung einspannbar ist.

Die Vorteile des erfindungsgemäßen Durchflußmeßgerätes im Vergleich zu bisher üblichen Geräten bestehen darin, daß
- Meßwertaufnehmer und Meßumformer zu einer kompakten, vormontierbaren Einheit verbunden sind, wodurch der Montageaufwand vor Ort erheblich verringert ist;
- der Durchfluß unabhängig von der Re-Zahl gemessen werden kann;
- Besonderheiten des zu messenden Mediums durch die Einbaulage des Meßgerates in der Rohrleitung berücksichtigt werden können;
- aufgrund der wenigen Dichtflächen die Leckagewahrscheinlichkeit reduziert ist;
- die Wirkdruckleitungen so kurz sind, daß sie sich selbständig entlüften und deshalb keine speziellen Armaturen mehr erforderlich sind;
- durch die kurzen Leitungslängen die Verfügbarkeit und die Sicherheit der Messungen hoch sind;
- die Gefahr der Verschmutzung gering geworden und die Beheizung erleichtert ist;
- der Verzicht auf spezielle Meßflansche eine rationellere Rohrfertigung erlaubt;
- in vielen Fällen die Erfassung der Kompensationstemperatur in den verwendeten Meßumformern ausreichen wird, um eine Betriebspunktunabhängigkeit über weite Temperaturbereiche zu erzielen.

## Patentansprüche

1. Durchflußmeßgerät für flüssige oder gasförmige Produkte, bestehend aus einer den Meßwert aufnehmenden Anordnung (6), einer in eine das zu messende Produkt führende Leitung (9, 10) eingefügten Blende oder Düse (8) und beidseitig der Blende oder Düse an die Leitung angeschlossenen Wirkdruckleitungen (11) und aus einem mit diesen in Verbindung stehenden Meßumformer (15), dessen Ausgang mit einer Auswerte- und Anzeigeeinheit (17) verbunden ist, **dadurch gekennzeichnet, daß** die Blende oder Düse (8) und die diese einschließenden Leitungsabschnitte (9, 10) mit den daran angeschlossenen Wirkdruckleitungen (11, 13) einen einstückigen, einen Meßwertaufnehmer darstellenden Funktionsblock (6) bilden, und die Wirkdruckleitungen in einen Anschlußflansch für den Meßumformer (15) münden.

2. Durchflußmeßgerät nach Anspruch 1, **dadurch gekennzeichnet, daß** die Blende oder Düse (8) und die diese einschließenden Leitungsabschnitte (9, 10) mit den daran angeschlossenen Wirkdruckleitungen (11,13) in ein Werkstück (7) eingearbeitet sind.

3. Durchflußmeßgerät nach Anspruch 1 und 2, **dadurch gekennzeichnet, daß** der Funktionsblock (6) leitungsseitig zwischen Normflansche der Produktleitung einspannbar ist.

## Claims

1. A flowrate meter for liquid or gaseous products, comprising an arrangement (6) which records the measured value, an orifice or nozzle (8) inserted into a pipe (9, 10) conveying the product to be measured, and differential pressure pipes (11) connected to the pipe on both sides of the orifice or nozzle, and comprising a measuring transducer (15) which is connected to said pressure pipes and whose output is connected to an evaluation and display unit (17), wherein the orifice or nozzle (8) and the pipe sections (9, 10) enclosing them form together with the differential pressure pipes (11, 13) connected thereto a one-piece function block (6) constituting a pickup, and the differential pressure pipes open into a connecting flange for the measuring transducer (15).

2. The flowrate meter as claimed in claim 1, wherein the orifice or nozzle (8) and the pipe sections (9, 10), enclosing them, with the differential pressure pipes (11, 13) connected thereto are incorporated into a workpiece (7).

3. The flowrate meter as claimed in claims 1 and 2, wherein the function block (6) can be clamped on the pipe side between standard flanges of the product pipe.

## Revendications

1. Appareil de mesure de débit pour des produits liquides ou gazeux, constitué d'un agencement (6), captant la valeur de mesure, d'un diaphragme ou ajutage (8) inséré dans un conduit (9, 10) guidant le produit à mesurer et, de part et d'autre du diaphragme ou ajutage, de conduits de pression différentielle (11) raccordés au conduit et d'un convertisseur de mesure (15) qui est en communication avec ceux-ci et dont la sortie est connectée à une unité d'évaluation et d'affichage (17), **caractérisé en ce que** le diaphragme ou ajutage (8) et les sections de conduit (9, 10) renfermant celui-ci forment, avec les conduits de pression différentielle (11, 13) raccordés à elles, un bloc de fonctionnement (6) d'une pièce représentant un capteur de valeur de mesure et **en ce que** les conduits de pression différentielle débouchent dans une bride de raccordement pour le convertisseur de mesure (15).

2. Appareil de mesure de débit suivant la revendication 1, **caractérisé en ce que** le diaphragme ou ajutage (8) et les sections de conduit (9, 10) qui le renferment sont adaptés, avec les conduits de pression différentielle (11, 13) raccordés à elles, dans une pièce d'usinage (7).

3. Appareil de mesure de débit suivant l'une des revendications 1 et 2, **caractérisé en ce que** le bloc de fonctionnement (6) peut être enserré, du côté conduit, entre des brides normalisées du conduit à produit.
